# EUROPEAN PATENT SPECIFICATION

(11) **EP 3 301 011 B1**
(45) Date of publication and mention of the grant of the patent: **11.12.2019**
(21) Application number: 16191232.4
(22) Date of filing: 28.09.2016
(51) Int. Cl.: B63H 23/10, B63H 23/28, B63H 21/14, B63J 3/02

(54) **POWERING SYSTEM FOR A SHIP**
SPEISUNGSSYSTEM FÜR EIN SCHIFF
SYSTÈME MOTEUR POUR UN NAVIRE

(43) Date of publication of application: 04.04.2018
(73) Proprietor: Arista Shipping S. A., Voula 16673 (GR)
(72) Inventor: Trakakis, Antonios, 16562, Athens (GR)
(74) Representative: Stolmár & Partner Patentanwälte PartG mbB

(56) References cited:
- EP-A1- 2 808 248
- WO-A1-03/099651
- WO-A2-2010/031579
- CN-B- 103 287 562
- Anonymous: "CK series controllable pitch propeller gearbox_Nanjing High Accurate Marine Equipment Co.,Ltd", , 21 March 2016 (2016-03-21), XP055569505, Retrieved from the Internet: URL:https://web.archive.org/web/2016032111 2857/http://www.ngc-marine.com/en/proinfo. asp?id=158 [retrieved on 2019-03-14]
- Anonymous: "Variable frequency drive for shaft generator (PTO/PTI)", , 1 July 2014 (2014-07-01), XP055569531, Retrieved from the Internet: URL:https://new.abb.com/docs/librariesprov ider91/articles/abb_energy_efficiency_guid e_variable-frequency-drive-for-shaft-gener ator_detailed-description222d12e4c1f463c09 537ff0000433538.pdf?sfvrsn=2 [retrieved on 2019-03-14]

## Description

### Field of Invention

The invention relates to a powering system for a vessel, in particular to a system that provides multiple power redundancies.

### Background of the Invention

Ships or vessels that operate in offshore zones need a reliable power supply for the electric systems and the propeller. Presently, an offshore vessel has a single engine for driving the propeller and furthermore three or four engines for driving the alternators which generate current to run all the electric systems on the ship. An example for a common system regarding the separation of the driving systems for propeller and alternator is disclosed in CN205259261 U.

The ship propulsion system therein includes an engine, a booster, an auxiliary blower, a first generator and a power supply unit, wherein the booster provides pressurized air to the engine, the auxiliary blower supplies air to the engine, the first generator provides power for the auxiliary blower in the first load segment within the load scope of the engine and stops in the second load segment, the second load segment is the scope that the load is higher than the first load segment and the power supply unit is different from the power supply of the first generator, and provides the power which is generated from the waste heat during the driving process of the engine, to the auxiliary blower in the second load segment.

CN 103 287 562 B discloses a diesel engine, electric generator and electromotor integrated ship hybrid power system and a hybrid method . The diesel engine, electric generator and electromotor integrated ship hybrid power system comprises a main diesel engine, wherein the main diesel engine is coaxially connected with a permanent magnet generator through a magnetism-stress coupling transmission mechanism, the permanent magnet generator is connected with a gear case through a magnetism-stress coupling transmission mechanism, the gear case is connected with a permanent magnet generator through a magnetism-stress coupling transmission mechanism, the permanent magnet generator is coaxially connected with an auxiliary diesel engine through a magnetism-stress coupling transmission mechanism, the auxiliary diesel engine is connected with a turbine power generating device, the turbine power generating device is connected with a storage battery, the storage battery is connected with a turbine power generating device, and the turbine power generating device is connected with the main diesel engine. The diesel engine, electric generator and electromotor integrated ship hybrid power system is used for providing power for the ship.

WO 2010/031579 A2 relates to a drive unit for water craft, comprising a prime mover assembly containing at least one prime mover and a transmission. The drive unit has a common frame, to which the prime mover assembly and the transmission are fixed, said frame being designed to be fixed to the water craft.

WO 03/099651 A1 discloses a marine vessel propulsion system comprising engine system for producing propulsion power and several propulsion means at its stern section, including a combination of at least two propulsion arrangements capable of steering action and at least one shaft driven propeller drive having a controllable pitch propeller, being adjustable to substantially feathering conditions. Furthermore, also a method of operating a marine vessel propulsion system is disclosed, in which at low speed or harbour manoeuvring operation the shaft driven propeller drive is adjusted to be feathering and power transmission to the propeller is stopped.

However, in the power systems as described above, there is always danger that the engine of the propeller fails and the ship cannot move on water at a normal speed if at all. Furthermore, the engines take a lot of space on the ship which then cannot be used for cargo any more.

### Disclosure of Invention

Object of the invention is to provide a powering system for a vessel or ship, that is on the one hand more reliable and on the other hand needs less space.

These objects are achieved by a powering system according to claim 1. Preferred embodiments are depicted in the dependent claims.

A system for powering a vessel according to the invention comprises at least two engines, at least two alternators for generating electrical power for the vessel, wherein the alternators are variable frequency type alternators and the alternators are driven by one or more of the engines, a propeller for driving the ship, and a gearbox for connecting the engines with at least the propeller, wherein the engines can both be connected to at least one alternator and the propeller simultaneously and wherein the alternator is directly connected to the engine by the same connecting shaft of the engine as the gearbox or by an additional output shaft of the engine solely for the alternator. This arrangement of the powering system is highly reliably in terms of securing the propulsion and the electric supply of the ship, because the ship's systems are driven redundantly.

Preferably, a coupling controlled by at least a connecting shaft from the engines and preferably also for each output shaft of the gearbox to enable engaging and disengaging these shafts. In this way, the transmission of force to the single elements can easily be controlled.

Each of the alternators is connected to be driven by a specific one of the at least two engines and is connected to an output shaft of that engine. By directly connecting the alternators to the respective engine, a more secure functioning of the alternator can be assured.

One single alternator can be adjusted to provide sufficient electrical energy for the vessel systems. That also gives a redundancy in view of the ships needed electricity. Even if the alternators need to be build bigger so that a single alternator can produce all the electricity for the whole ship, the overall space that is needed for the powering system is still smaller than in known systems. Furthermore, the system has less moving parts in total and, therefore, requires less maintenance and offers an advantage by weighing less than conventional arrangements.

Preferably, a single engine is configured to drive the propeller alone. I.e. one engine is able to provide enough power for the propulsion system to drive the ship.

The engines used in the present powering systems are preferably 4-stroke low pressure engines. In particular, these engines are dual fuel 4-stroke low pressure engines gas supply. In particular the use of liquid natural gas improves the environmental impact of the ship since the emission of several pollutants (CO₂, SOₓ, NOₓ) can be greatly reduced.

The System comprises ideally exactly two engines. Furthermore, the system can also comprise exactly two alternators. These numbers of engines and/or alternators are enough to provide the redundancy for the propulsion and the electric power, but are also minimized in view of the needed space for the engines and/or the alternators.

The propeller is preferably one of a controllable pitch type. This enables an uncomplicated way to reverse the ship and adjust the speed as well as improve the manoeuvrability and load control.

As stated above, the alternators are variable frequency type alternators. In this way, the Engine can run at its optimum efficiency at all time at variable speed and still can drive the alternators which will have a constant and reliable electrical output.

### Brief Description of the Figures

Figure 1 is a schematic illustration of an arrangement of a powering system according to the invention comprising exactly two engines and alternators.
Figure 2 is a schematic illustration of an engine room with an engine running with liquid natural gas.

### Description of the preferred embodiments

Figure one shows a schematic arrangement of a preferred embodiment of the powering system 10 according to the invention. The invention can generally be used for any kind of ship with an on-board engine, but the invention is best used in bigger vessels for example above 300 gt.

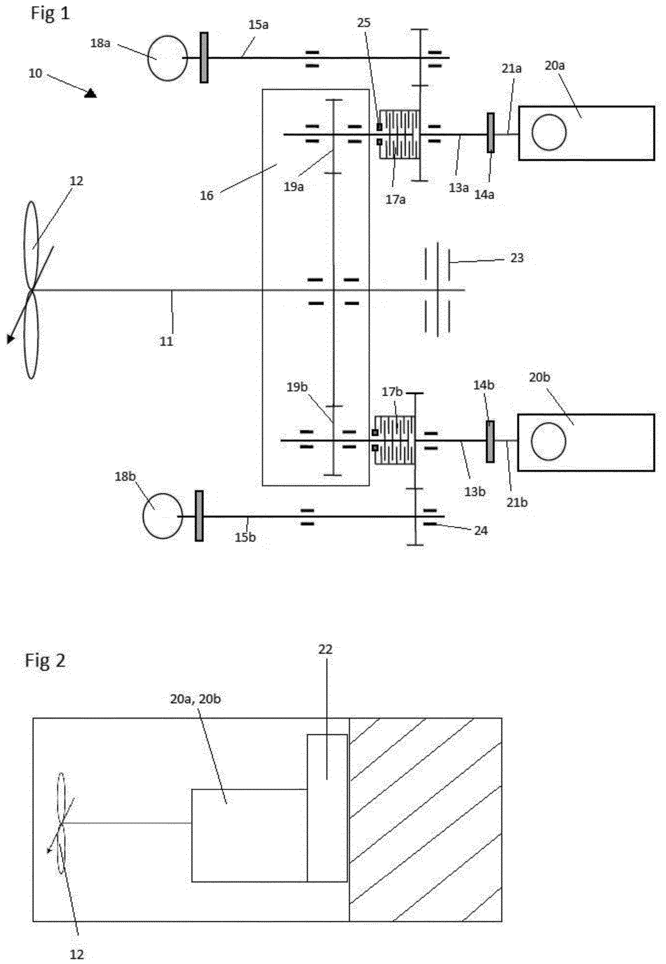

The system comprises a plurality of engines, ideally exactly two engines 20a, 20b, which are each able to drive at least the propeller 12 and an power-take-off (PTO) or alternator 18a, 18b. The engines 20a, 20b are preferably dual fuel 4-stroke low pressure engines that can either run with liquid natural gas (LNG) or other conventional liquid fuel (HFO/MDO/LSMGO). If LNG is used, a special gas valve unit 22 is provided to control gas pressure to the engine according to the engine load. LNG is preferable because the emissions of LNG are not as environmentally harmful as conventional fuel used for ships. A small part of the space that is saved due to the powering system has to be used for the due to the extra gas valve unit 22. However, the gas valve unit 22 is not very big, so that there is still a huge space that is saved in view of the prior art arrangement with up to 5 engines (see Figure 2). The output shafts 21a, 21b of the engines 20a, 20b comprise an elastic coupling 14a, 14b to absorb rotational stress in the output shafts and the vibration from the engines 20a, 20b.

The powering system 10 comprises also alternators 18a, 18b or power-take-offs which serve to generate electric energy to supply and cover the ship's need. The alternators are connected to the engines directly.

In Figure 1, the alternators 18a, 18b are connected directly to the engines by a connecting shaft 13a, 13b, so as to keep the gearbox simple. In the shown embodiment, the alternator 18a, 18b is connected to the same connecting shaft 13a, 13b of the engine than the gearbox 16, but connected before the coupling 17a, 17b. It is also possible to provide an additional output shaft of the engine solely for the alternator. However, if the alternator 18a, 18b is connected directly to the engine, the PTOs/alternators 18a, 18b are preferably working with a variable frequency so that they can have a constant electricity output no matter of the rounds per minute of the input shaft 15a, 15b. This is particularly helpful with a direct connection, since the motor will have a differing output according to the respective power demand of the propulsion system and, thus, the input shafts 15a, 15b will also provide the alternators with different inputs. In another embodiment, the PTOs/alternators 18a, 18b are driven via the gearbox 16 and are preferably provided with a coupling each. In this way it is possible to connect and disconnect the alternators as they are needed for electricity generation.

In the embodiment shown in Figure 1, the gearbox 16 is shown as a dashed lined box. The gearbox 16 connects the engines 20a, 20b with the propeller 12. The gearbox 16 is schematically shown and comprises the two couplings 17a, 17b which are connected to the connection shaft 13a, 13b. From the input shafts 19a, 19b of the gearbox 16, the rotational force is transmitted to the output shaft 11 of the gearbox and is transmitted to the propeller 12.

The propeller is preferably a controllable pitch type propeller so that the propeller blades can be adjusted. In this case, the ship is able to reverse without having the engines to stop or to disengage the couplings 17a, 17b. It is possible to provide another coupling at the output shaft of the gearbox 16 to enable disengaging the propeller 12 without having to disengage the engines 20a, 20b. This is useful if the alternators 18a, 18b are connected to and driven via the gearbox 16 so as to disengage the propeller 12 without having to stop the alternators 18a, 18b.

By driving the ship, the single components can be controlled to be used as needed. I.e. depending on the required speed both engines 20a, 20b can run and drive the propeller 12 and/or the alternators 18a, 18b. Since the capacity of an alternator is sufficient to cover 100% of the ship's need at any operating condition, it is also possible to run only one engine if the required speed does not make a higher overall power output necessary. And in case one engine fails, the other engine is able to provide still enough propulsion for the ship to drive with at least an appropriate speed and drive at least one alternator 18a, 18b.

In figure 1 are schematically shown the thrust bearings 23, sleeve bearings 24 and roller bearings 25 which support the different input and output shafts and the couplings. E.g. the propeller shaft 11 is supported with a thrust bearing 23, the couplings 17a, 17b are supported by a roller bearing and the other shafts are supported by a sleeve bearing.

The powering system is preferably built symmetrically in terms of the functions of the different components. I.e. the propulsion/drive trains from the engines 20a, 20b to the propeller 12 and the alternators 18a, 18b are identically to make sure both engines 20a, 20b can achieve the same tasks.

**List of Reference Numbers**

| | |
|---|---|
| powering system | 10 |
| propeller shaft | 11 |
| propeller | 12 |
| connecting shaft | 13a, 13b |
| elastic coupling | 14a, 14b |
| input shaft alternator | 15a, 15b |
| gearbox | 16 |
| coupling | 17a, 17b |
| alternator | 18a, 18b |
| input shafts gearbox | 19a, 19b |
| Engine | 20a, 20b |
| output shafts engine | 21a, 21b |
| gas valve unit | 22 |
| thrust bearing | 23 |
| sleeve bearing | 24 |
| roller bearing | 25 |

## Claims

1. System (10) for powering a vessel comprising
at least two engines (20a, 20b);
at least two alternators (18a, 18b) for generating electrical power for the ship, each alternator (18a, 18b) being driven by one or more of said engines (20a, 20b), wherein the alternator (18a, 18b) is a variable frequency type alternator;
a propeller (12) for driving the ship; and
a gearbox (16) comprising two disengagable couplings (17a, 17b), each coupling (17a, 17b) is connected to a connecting shaft (13a, 13b) of each engine (20a, 20b), the gearbox (16) further connecting the engines (20a, 20b) with at least the propeller (12);
wherein each engine (20a, 20b) can both be connected to at least one alternator (18a, 18b) and the propeller simultaneously and wherein each alternator (18a, 18b) is directly connected to said engine by said connecting shaft (13a, 13b) or by an additional output shaft of the engine (20a, 20b)solely for the alternator (18a, 18b).

2. System (10) according to claim 1, wherein each of the alternators (18a, 18b) is connected to be driven by a specific one of the at least two engines (20a, 20b).

3. System (10) according to one or more of the preceding claims, wherein a single alternator (18a, 18b) is adjusted to provide sufficient energy for the ship's systems.

4. System (10) according to one or more of the preceding claims, wherein a single engine (20a, 20b) is configured to solely drive the propeller (12).

5. System (10) according to one or more of the preceding claims, wherein the engines (20a, 20b) are dual fuel 4-stroke low pressure engines.

6. System (10) according to one or more of the preceding claims, which exactly comprises two engines (20a, 20b).

7. System (10) according to one or more of the preceding claims, which exactly comprises two alternators (18a, 18b).

8. System (10) according to one or more of the preceding claims, wherein the propeller (12) is a controllable pitch type propeller.

## Patentansprüche

1. System (10) für den Antrieb eines Schiffes, umfassend:
wenigstens zwei Motoren (20a, 20b);
wenigstens zwei Generatoren (18a, 18b) zum Erzeugen von elektrischem Strom für das Schiff, wobei jeder Generator (18a, 18b) von einem oder mehreren der genannten Motoren (20a, 20b) angetrieben wird, wobei der Generator (18a, 18b) ein Generator eines Frequenzumrichters ist;
einen Schiffschraube(12) zum Antreiben des Schiffs; und
ein Getriebe (16), das zwei auskuppelbare Kupplungen (17a, 17b) umfasst, wobei jede Kupplung (17a, 17b) mit einer Verbindungswelle (13a, 13b) jedes Motors (20a, 20b) verbunden ist, wobei das Getriebe (16) ferner die Motoren (20a, 20b) mit zumindest der Schiffschraube (12) verbindet;
wobei jeder Motor (20a, 20b) gleichzeitig mit zumindest einem Generator (18a, 18b) und der Schiffschraube verbindbar ist und wobei jeder Generator (18a, 18b) direkt mit dem zumindest einen Motor durch die Verbindungswelle (13a, 13b) oder durch eine zusätzliche Abtriebswelle des Motors (20a, 20b) allein für den Generator (18a, 18b) verbunden ist.

2. System (10) nach Anspruch 1, wobei jeder der Generatoren (18a, 18b) zum Antreiben durch einen spezifischen der zumindest zwei Motoren (20a, 20b) verbunden ist.

3. System (10) nach einem oder mehreren der vorherigen Ansprüche, wobei ein einzelner Generator (18a, 18b) eingestellt ist, um ausreichend Energie für die Systeme des Schiffs bereitzustellen.

4. System (10) nach einem oder mehreren der vorherigen Ansprüche, wobei ein einzelner Motor (20a, 20b) so konfiguriert ist, dass er alleine die Schiffschraube (12) antreiben kann.

5. System (10) nach einem oder mehreren der vorherigen Ansprüche, wobei die Motoren (20a, 20b) 4-Takt-Niederdruckmotoren mit zwei Kraftstoffen sind.

6. System (10) nach einem oder mehreren der vorherigen Ansprüche, das genau zwei Motoren (20a, 20b) umfasst.

7. System (10) nach einem oder mehreren der vorherigen Ansprüche, das genau zwei Generatoren (18a, 18b) umfasst.

8. System (10) nach einem oder mehreren der vorherigen Ansprüche, wobei die Schiffschraube (12) eine Neigungsverstellbare Schiffschraube ist.

## Revendications

1. Système (10) de motorisation d'un navire comprenant
au moins deux moteurs (20a, 20b) ;
au moins deux alternateurs (18a, 18b) pour générer un courant électrique pour le navire, chaque alternateur (18a, 18b) étant entraîné par un ou plusieurs desdits moteurs (20a, 20b), l'alternateur (18a, 18b) étant un alternateur du type à fréquence variable ;
une hélice (12) pour entraîner le navire ; et
une boîte de vitesses (16) comprenant deux accouplements débrayables (17a, 17b), chaque accouplement (17a, 17b) étant connecté à un arbre de couplage (13a, 13b) de chaque moteur (20a, 20b), la boîte de vitesses (16) connectant en outre les moteurs (20a, 20b) à au moins l'hélice (12) ;
dans lequel chaque moteur (20a, 20b) peut à la fois être connecté à au moins un alternateur (18a, 18b) et à l'hélice simultanément et dans lequel chaque alternateur (18a, 18b) est connecté directement audit moteur par ledit arbre de couplage (13a, 13b) ou par un arbre de sortie supplémentaire du moteur (20a, 20b) destiné uniquement à l'alternateur (18a, 18b).

2. Système (10) selon la revendication 1, dans lequel chacun des alternateurs (18a, 18b) est connecté pour être entraîné par un moteur spécifique des au moins deux moteurs (20a, 20b).

3. Système (10) selon une ou plusieurs des revendications précédentes, dans lequel un seul alternateur (18a, 18b) est réglé pour fournir une énergie suffisante aux systèmes du navire.

4. Système (10) selon une ou plusieurs des revendications précédentes, dans lequel un seul moteur (20a, 20b) est configuré pour entraîner uniquement l'hélice (12).

5. Système (10) selon une ou plusieurs des revendications précédentes, dans lequel les moteurs (20a, 20b) sont des moteurs basse pression à 4 temps à deux combustibles.

6. Système (10) selon une ou plusieurs des revendications précédentes, lequel comprend exactement deux moteurs (20a, 20b).

7. Système (10) selon une ou plusieurs des revendications précédentes, lequel comprend exactement deux alternateurs (18a, 18b) .

8. Système (10) selon une ou plusieurs des revendications précédentes, dans lequel l'hélice (12) est une hélice du type à pas variable.
